# FASCICULE DE BREVET EUROPEEN

(11) **EP 3 222 478 B1**
(45) Date de publication et mention de la délivrance du brevet: **17.03.2021**
(21) Numéro de dépôt: 17162752.4
(22) Date de dépôt: 24.03.2017
(51) Int. Cl.: B60T 8/17

(54) **DISPOSITIF DE FREINAGE REDONDANT**
REDUNDANTE BREMSVORRICHTUNG
REDUNDANT BRAKING SYSTEM

(30) Priorité: 25.03.2016 FR 1652638
(43) Date de publication de la demande: 27.09.2017
(73) Titulaire: Poclain Hydraulics Industrie, 60410 Verberie (FR)
(72) Inventeur: HEREN, Jean, 60410 VERBERIE (FR); ENGRAND, Julien, 60410 VERBERIE (FR)
(74) Mandataire: Regimbeau

(56) Documents cités:
- CN-B- 102 649 448
- CN-B- 103 322 097
- FR-A1- 2 516 463
- US-A1- 2015 330 468

## Description

### DOMAINE TECHNIQUE GENERAL

L'invention concerne le domaine du freinage hydraulique et plus particulièrement les commandes de freinage hydraulique avec redondance.

### ETAT DE L'ART

Dans un certain nombre de pays, les règlements en vigueur imposent aux concepteurs de véhicules de prévoir plusieurs modes et plusieurs moyens de freinage.

Avec des premiers moyens de freinages, on peut citer comme mode un freinage principal, qui doit par exemple provoquer une décélération de 51% en Europe pour les engins de type tracteur agricole et on peut citer comme autre mode le freinage secondaire, qui doit par exemple provoquer une décélération de 22% pour ces mêmes engins.

On parlera plus généralement de freins de service pour ces premiers moyens de freinage.

Avec d'autres moyens de freinage, on peut aussi citer le freinage de parking, qui doit par exemple maintenir une tenue sur une pente à 18%

Le document US 2015330468 divulgue un système de freinage comprenant : un frein dynamique, comprenant un vérin hydraulique, comprenant un cylindre, un piston mobile dans le cylindre, et une chambre apte à être remplie pour déplacer le piston dans le cylindre et actionner le frein, un circuit d'alimentation du frein, comprenant un réservoir, une pompe, et une ligne d'alimentation du frein, un dispositif de commande du frein, comprenant une valve de régulation de pression de fluide dans la chambre du frein, et une commande progressive, la valve comprenant une voie reliée à la ligne d'alimentation, une voie reliée au réservoir, et une voie reliée à la chambre du frein, et étant adaptée pour sélectivement relier la voie reliée à la chambre à l'une ou l'autre des autres voies, pour délivrer une pression déterminée dans la chambre en fonction d'un degré d'actionnement de la commande, le système de freinage.

Sur les véhicules équipés de deux essieux, il est connu de sécuriser les fonctions de freinage de service en séparant les commandes de chaque essieu. En d'autres termes, le freinage sur l'essieu avant est assuré par un premier circuit hydraulique et le freinage sur l'essieu arrière est assuré par un deuxième circuit hydraulique.

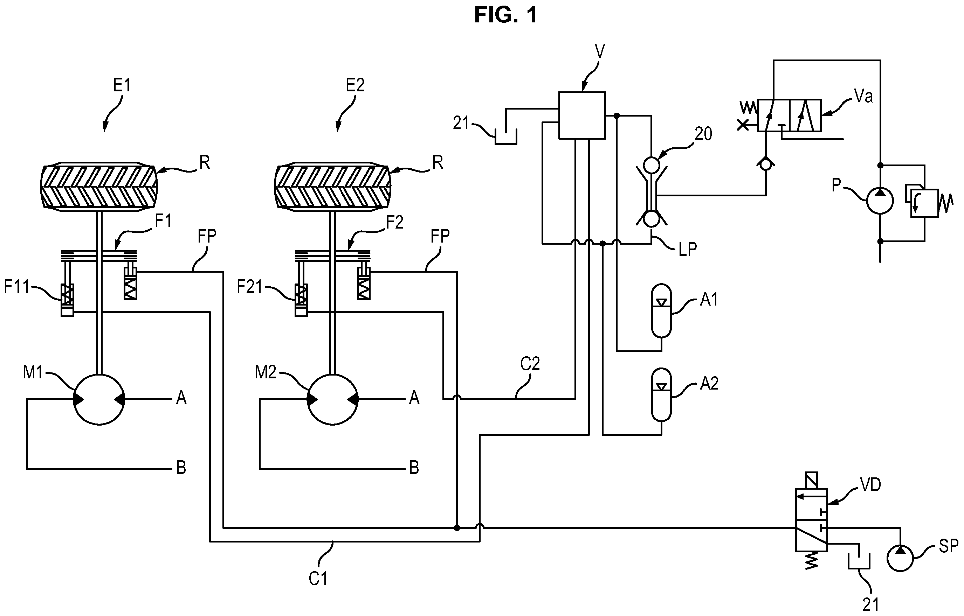

La **figure** 1 illustre un schéma hydraulique d'un dispositif connu de l'art antérieur. Un essieu avant E1 et un essieu arrière E2, avec leur roue R, sont représentés. Ces deux essieux E1, E2 peuvent être sur un même véhicule *stricto sensu* ou bien sur un tracteur et une remorque.

Chaque essieu E1, E2 peut être motorisé par un moteur hydraulique M1, M2 et chaque arbre de l'essieu comprend des freins F1, F2 piloté hydrauliquement par un système de frein F11, F21.

Ces systèmes de freins F11, F12 sont dits à commande positive, c'est-à-dire qu'ils activent les freins F1, F2 lorsqu'une pression d'huile est appliqué.

Un premier circuit C1, mis sous pression sélectivement à l'aide d'un accumulateur A1 à partir d'une valve V, permet de mettre sous pression le système de frein F1 et de ralentir l'essieu E1.
Un deuxième circuit C2, mis sous pression sélectivement à l'aide d'un autre accumulateur A2 à partir de la même valve V, permet de mettre sous pression le système de frein F2 et de ralentir l'essieu E2.

La valve V est par exemple une valve manuelle dont la commande permet de faire varier la mise sous pression dans le premier circuit C1 et le deuxième circuit C2.

En fonction de la régulation de la valve V, on peut obtenir différents modes de freinage.

La valve V permet aussi de relâcher les freins en dirigeant l'huile du système de frein vers un réservoir 21.

Une pompe P, par exemple une pompe de gavage associé à une pompe hydraulique qui alimente les moteurs M1 et M2, et une valve de remplissage Va permettent de remplir les accumulateurs A1, A2 lorsque leur pression baisse, ou bien de suppléer les accumulateurs dans leur rôle de mise sous pression des circuits C1 et C2 lorsque lesdits accumulateurs A1 et A2 ne sont pas fonctionnels.

A titre d'illustration, un frein de parking FP a été implémenté sur chaque essieu E1, E2. Ce frein de parking FP est dit à commande négative, c'est-à-dire qu'il a un fonctionnement inverse des freins F1, F2 : lorsqu'aucune pression ne lui est appliquée, il maintient l'essieu immobile. Une source de pression SP reliée audit frein via une valve de défreinage VD est prévue. Dans une première position, par défaut, la valve VD relie le frein de parking à un réservoir 21 à pression nulle et dans une deuxième position, pilotée, la valve VS relie le frein de parking FP à la source de pression SP. La source de pression SP peut être un accumulateur dédié ou la pompe de gavage, par exemple. La valve de défreinage VD est pilotée électriquement et/ou mécaniquement (main ou pied par exemple).

Grâce à la redondance du dispositif à l'aide de deux circuits C1, C2, de deux accumulateurs A1, A2, etc., si, par exemple, le système de freinage lié à l'essieu avant E1 subit un dysfonctionnement, le système de freinage lié à l'essieu E2 est toujours fonctionnel car il est complètement indépendant.

Néanmoins, en cas de dysfonctionnement, les freinages peuvent être perturbés, notamment à cause des conditions structurelles des véhicules. Par exemple, si le centre de gravité est très élevé, comme sur un pulvérisateur, le report de masse entre essieux E1 et E2 lors d'un freinage limite le couple de freinage transmissible par l'essieu arrière E2. Dans ces conditions, il faut idéalement limiter la commande de freinage de l'essieu arrière E2 en fonction de la charge sur l'essieu avant E1 pour éviter le blocage des roues. Dans d'autres cas, le couple de freinage fourni par l'essieu arrière E2 peut tout simplement ne pas suffire pour répondre aux normes.

### PRESENTATION DE L'INVENTION

L'invention concerne un dispositif de freinage pour essieu comprenant :
- une première source de pression,
- une première ligne hydraulique de commande, reliée à la première source de pression,
- une première valve à actionnement manuel disposé sur la première ligne,
- des moyens de freinage hydrauliques associés à un demi-essieu de l'essieu, reliés à la première ligne hydraulique, de sorte que lesdits moyens sont activables par mise sous pression,
le dispositif étant caractérisé en ce qu'il comprend :
- une deuxième source de pression,
- une deuxième ligne hydraulique de commande, reliée à la deuxième source de pression,
- une deuxième valve à actionnement manuel, et
en ce que :
- les moyens de freinage hydrauliques associés audit demi-essieu sont reliés à la deuxième ligne hydraulique, de sorte que lesdits moyens sont activables par mise sous pression,
- les deux valves à actionnement manuel sont pilotables par une même commande mécanique.

L'invention peut comprendre les caractéristiques suivantes, prises seules ou en combinaison :
- les moyens de freinage du demi-essieu comprennent une chambre de commande, un élément mobile et un élément fixe configuré pour venir en contact de l'élément mobile pour le freiner lorsque de l'huile sous pression est mise dans la première chambre, ladite chambre de pression étant relié à la première ligne hydraulique et à la deuxième ligne hydraulique par un sélecteur haute pression, configuré pour sélectionner la plus haute pression parmi les deux lignes,
- les moyens de freinage du demi-essieu comprennent :
   une première chambre de commande reliée à la première source de pression par la première ligne hydraulique, et
   une deuxième chambre de commande, hydrauliquement étanche par rapport à la première chambre de commande, et reliée à la deuxième source de pression par la deuxième ligne, les deux chambres de commande provoquant chacune, lorsque mise sous pression, l'activation des moyens de freinage,
- les moyens de freinage pour demi-essieu comportent un élément mobile et au moins un élément fixe configuré pour venir en contact de l'élément mobile pour le freiner lorsque de l'huile sous pression est mise dans la première chambre et/ou dans la seconde chambre, les deux chambres permettant l'action sur le même élément mobile,
- le dispositif comprend un seul élément fixe, les deux chambres agissant sur le même élément fixe, via un unique piston de frein,
- le piston de frein présente deux sections différentes à deux endroits du piston différents, pour les deux chambres de commande,
- le dispositif comprend un seul élément fixe, les deux chambres agissant sur le même élément fixe, via deux pistons de frein respectifs,
- le dispositif comprend deux éléments fixes, chaque chambre agissant un des deux éléments fixes, respectivement,
- les moyens de freinage pour demi-essieu comportent un premier élément mobile et un premier élément fixe configuré pour venir en contact de l'élément mobile pour le freiner lorsque de l'huile sous pression est mise dans la première chambre, et dans lequel les moyens de freinage pour le même demi-essieu comportent un deuxième élément mobile et un deuxième élément fixe configuré pour venir en contact du deuxième élément mobile pour le freiner lorsque de l'huile sous pression est mise dans la deuxième chambre de commande,
- lequel les moyens de freinage sont de type à disques, et sont configurés pour que la pression d'huile pilote la translation de garnitures configurées pour venir serrer lesdits disques et les freiner en rotation,
- les valves à actionnement manuel sont configurées pour doser progressivement la communication en pression entre les sources de pression et les chambres de commandes respectives,
- les valves à actionnement manuel ont une commande progressive, adaptée pour délivrer une pression déterminée dans la ou les chambres en fonction d'un degré d'actionnement de la commande,
- chaque valve à actionnement manuel comprend un orifice d'entrée/sortie relié à la source de pression respective, un orifice d'entrée/sortie relié à un réservoir, et un orifice d'entrée/sortie relié à au moins une chambre de commande, la valve de régulation de pression de fluide étant adaptée pour sélectivement relier l'orifice d'entrée/sortie relié à la chambre à l'un ou l'autre des autres orifices, en fonction de la pression dans la chambre et du degré d'actionnement de la commande,
- chaque valve à actionnement manuel comprend :
   un plongeur mobile en translation dans un cylindre,
   un organe de transfert de poussée, adapté pour exercer une poussée sur le plongeur tendant à mettre en communication l'orifice d'entrée-sortie relié à la source de pression avec l'orifice d'entrée/sortie relié à la chambre de commande en réponse à l'actionnement de la commande, et
   une chambre de rétroaction reliée à la chambre de commande par un orifice d'entrée/sortie de la valve, la chambre étant disposée d'un côté opposé à l'organe de transfert par rapport au plongeur de sorte qu'une pression de fluide dans la chambre exerce une poussée sur le plongeur tendant à mettre en communication l'orifice d'entrée/sortie relié à la chambre du frein avec l'orifice d'entrée/sortie relié au réservoir,
- la valve de régulation de pression de fluide est adaptée pour relier l'orifice d'entrée/sortie relié à la chambre à l'orifice d'entrée/sortie relié au réservoir quand la pression dans la chambre excède une pression correspondant à un niveau d'actionnement de la commande,
- la valve de régulation de pression de fluide est adaptée pour relier l'orifice d'entrée/sortie relié à la chambre à l'orifice d'entrée/sortie relié au réservoir quand la pression dans la chambre excède une pression correspondant à un niveau d'actionnement de la commande,
- la commande mécanique définit, entre une position de repos et une position maximale, une course d'activation, et dans lequel le dosage progressif est proportionnel à ladite course,
- les deux valves forment deux sous-unités d'une valve physique comprenant la commande mécanique,
- les valves à actionnement manuel et la commande mécanique font partie d'une valve double circuit,
- les sources de pressions sont des accumulateurs,
- la valve à actionnement manuel est associée à un circuit de chargement des accumulateurs, ledit circuit de chargement pouvant faire office de source de pression lui-même,
- la pression maximale dans les chambres de commande est déterminée par les valves à actionnement manuel, indépendamment des pressions des sources de pression,

L'invention concerne aussi des moyens de freinage associables à un demi-essieu d'un essieu, comprenant un élément mobile en rotation, un élément fixe en rotation, une première chambre de commande et une deuxième chambre de commande, dans lequel chaque chambre de commande est configurée pour provoquer la mise en contact de l'élément fixe sur l'élément mobile lorsqu'une pression au sein de ladite chambre est appliquée, les moyens de freinage hydrauliques étant utilisables dans un dispositif tel que défini précédemment.

L'invention concerne aussi un moteur hydraulique à came lobée et pistons radiaux comprenant des moyens de freinage hydraulique tel que décrits précédemment.

L'invention concerne aussi un ensemble comprenant :
- un dispositif tel que décrit précédemment,
- un moteur hydraulique comprenant

Un carter,
Un arbre pouvant être mis en rotation pour apporter du couple à l'essieu, et étant équipé des moyens de freinage, ledit arbre comprenant des disques, ledit arbre définissant un axe longitudinal,
dans lequel les moyens de freinage comprennent un couvercle solidaires du carter,
dans lequel des garnitures sont configurées pour venir serrer et immobiliser la rotation des disques de l'arbre.

Avantageusement :
- l'ensemble comprend deux jeux de palier disposés en vis-à-vis et permettant la rotation de l'arbre par rapport au carter, et dans lequel les moyens de freinage sont intégrés au moteur hydraulique, le couvercle étant solidaire avec le carter ou formé par le carter et les disques et garnitures sont disposés longitudinalement entre les deux jeux de paliers,
- le moteur hydraulique comprend un bloc-cylindre et un distributeur configuré pour alimenter en huile le bloc-cylindre, dans lequel les moyens de freinage sont intégrés au moteur hydraulique, le couvercle étant solidaire avec le carter ou formé par le carter, et les éléments sont agencés longitudinalement selon l'ordre suivant : bloc-cylindre, distributeur et disques/garnitures,
- le moteur hydraulique est un moteur à pistons radiaux et came multilobe, l'arbre tournant à la même vitesse que la vitesse des roues.

L'invention concerne aussi un véhicule un essieu et un dispositif tel que décrit précédemment et/ou un ensemble tel que décrit précédemment, dans lequel les moyens de freinage sont montés sur ledit essieu.

Dans un mode de réalisation, l'essieu n'est pas motorisé.

L'invention propose aussi un procédé de freinage à l'aide d'un dispositif tel que décrit précédemment, comprenant une étape d'application d'une pression dans au moins une chambre suite à l'activation de la valve de freinage.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- La figure 1, déjà présentée, représente un dispositif de l'art antérieur,
- Les figures 2 à 5 schématisent des dispositifs, moyens de freinage, ensembles et moteurs conformes à des modes de réalisation de l'invention,
- Les figures 6 et 7 représentent deux types de systèmes de frein intégrés à des moteurs hydrauliques,
- Les figures 8a et 8b représentent un mode de réalisation de valve à actionnement manuel.

### DESCRIPTION DETAILLEE

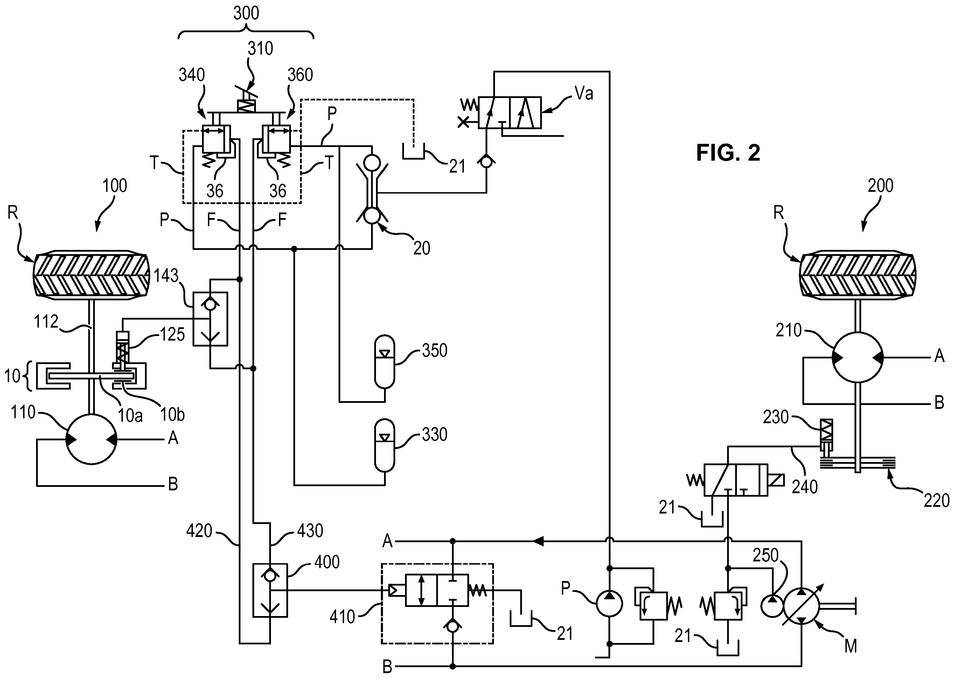

En référence aux **figures 2 à 7****,** plusieurs modes de réalisation d'un dispositif de freinage pour essieu de véhicule va être décrit.

Le dispositif consiste en une redondance de freinage sur un même essieu sur lequel est montée une roue R. Plus précisément, la redondance concerne un demi-essieu 100, c'est-à-dire uniquement le côté gauche ou droit du véhicule, et plus précisément encore une roue dudit essieu. Ce qui est relatif à un demi-essieu s'applique aussi à l'autre demi-essieu. Le demi-essieu comprend des moyens de freinage 10 configurés pour ralentir, limiter et/ou stopper la rotation d'un arbre 112 portant la roue R. On définit un axe longitudinal X pour l'arbre 112.

On comprend donc qu'il y a des moyens de freinage 10 pour un demi-essieu et des moyens de freinage pour l'autre demi-essieu. Pour des raisons de clarté, seul un demi-essieu sera décrit.

Le demi-essieu 100 est avantageusement motorisé par un moteur hydraulique 110 à pistons radiaux et came lobée. De préférence, ce moteur est lié à la roue sans intermédiaire (réducteur, multiplicateur). La vitesse du moteur est donc la vitesse de la roue. Les moyens de freinage 10 peuvent être indépendants ou intégrés à ce moteur 110. Plus de détails seront donnés par la suite.

Ces moyens de freinage 10 sont à fonctionnement hydraulique positif, c'est-à-dire qu'ils freinent la roue R lorsqu'une pression hydraulique leur est appliquée.
Plusieurs modes de réalisation vont être décrits par la suite.

Le dispositif comprend une première source de pression 330 configurée pour alimenter les moyens de freinage 10 en pression via une première ligne hydraulique 140. Une première valve à actionnement manuel 340 est disposée sur cette première ligne 140 pour piloter la mise sous pression.

Le dispositif comprend une deuxième source de pression 350 configurée pour alimenter les moyens de freinage 10 via une deuxième ligne hydraulique 160. Similairement à la première ligne 140, une deuxième valve à actionnement manuel 360 est disposée sur cette deuxième ligne 160 pour piloter la mise sous pression. La deuxième ligne hydraulique 160 est indépendante de la première ligne 140

Les deux valves 340 et 360 sont en revanche pilotées par la même commande mécanique manuelle 310.

Les deux valves 340, 360 permettent en outre de relier les chambres de commande au réservoir 21 afin de permettre le relâchement des freins dès lors que l'opérateur n'actionne plus la commande mécanique manuelle 310. Un mode de réalisation des valves 340, 360 sera décrit en détail par la suite.

On dispose ainsi de deux circuits hydrauliques indépendants 130, 140, 330 et 150, 160, 350, agissant sur les moyens de freinage 10, et pilotés par deux valves 340, 360 avec la même commande mécanique 310.

En fonctionnement normal, les moyens de freinage sont pressurisés respectivement par les lignes 140, 160 associées aux valves 340, 360 respectives, ce qui génère un couple de freinage dit « principal », dimensionné en fonction d'un cahier des charges donné.

En cas de défaillance d'un des deux circuits, comme la rupture d'un flexible, l'autre circuit permet d'obtenir un couple de freinage, que l'on peut définir comme le freinage dit « secondaire ».

En outre, comme explicité par la suite, la détection des défauts d'un des circuits de commande est facilitée et seul un essieu, c'est-à-dire les deux demi-essieux, doit être équipé.

Ce dispositif est avantageusement implémenté sur un véhicule à au moins deux essieux, et est plus précisément implémenté sur l'essieu avant dudit véhicule et plus spécifiquement sur le demi-essieu avant.

Naturellement, pour des raisons de symétrie, les deux demi-essieux sont équipés et partagent le dispositif à l'exception des moyens de freinage qui sont montés en parallèle. Cette implémentation améliore la capacité de freinage et évite le blocage des roues arrière. La gestion du freinage de l'essieu arrière en fonction de la charge est dorénavant inutile.

Par véhicule à deux essieux, on entend aussi une unité tractrice et une remorque.

Le frein de parking tel que présenté en introduction peut être monté sur l'essieu arrière : une série de disques 220 est serrée sous l'effet d'un moyen de rappel 230 et est relâchée lorsqu'une pression issue d'une ligne de défreinage 240 est appliquée. La pression est typiquement fournie par une pompe de gavage 250. La valve de défreinage telle que décrite en introduction est toujours présente ici, dans les modes de réalisations illustrés par les figures.

Plusieurs modes de réalisation des moyens de freinage 10 vont être à présent décrits.

Dans un premier mode de réalisation présenté en **figure 2****,** les moyens de freinage 10 du demi-essieu 100 comprennent un élément mobile 10a et un élément fixe 10b configuré pour venir en contact de l'élément mobile 10a afin de freiner ledit élément mobile 10a lorsque de l'huile sous pression est appliquée. Plus précisément, les moyens de freinage 10 comprennent une première chambre de commande 125 qui permet de déplacer l'élément fixe 10b par application d'une pression. Dans ce mode de réalisation, la chambre de pression 125 est reliée aux lignes hydrauliques par un sélecteur haute pression 143 qui sélectionne la plus haute pression entre la première et la deuxième ligne hydraulique 140, 160 tout en isolant les deux lignes 140, 160. La chambre est donc toujours reliée à une des deux lignes, ce qui autorise le sélecteur 143 à faire monter en pression la chambre 125 pour freiner, mais aussi à faire relâcher ladite pression pour libérer les freins via les valves 340, 360.

Le sélecteur haute pression 143 est typiquement un clapet navette.

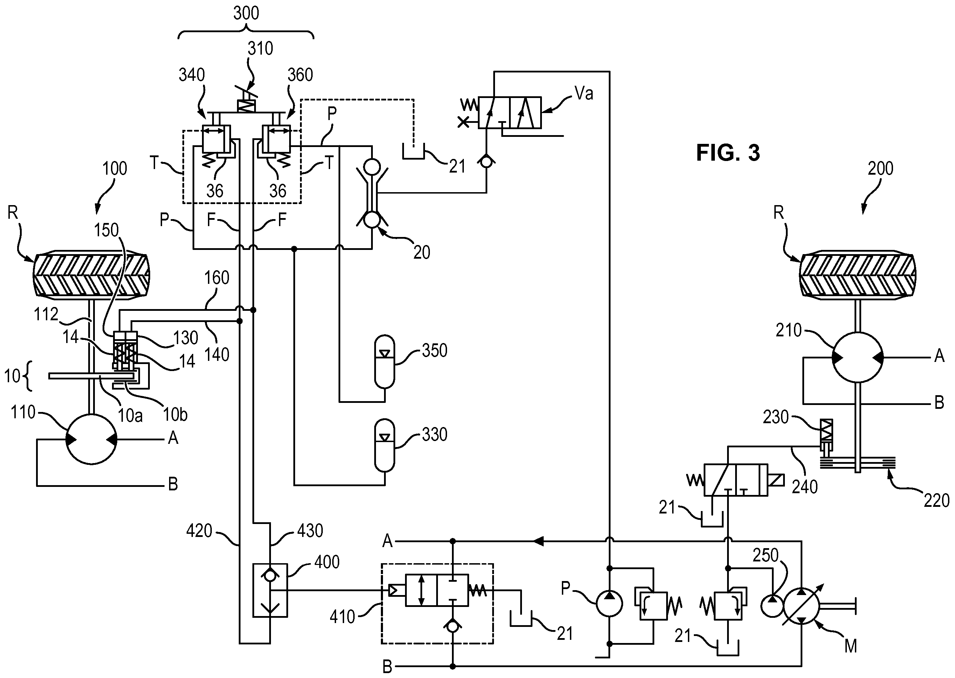

Dans un second mode de réalisation présenté en **figures 3 à 5****,** les moyens de freinage 10 du demi-essieu 100 comprennent une première chambre de commande 130 alimentée par la première ligne hydraulique 140 et une deuxième chambre de commande 150 alimentée par la deuxième ligne hydraulique 160. Les deux chambres de commande 130, 150 provoquent chacune, lorsque mise sous pression, l'activation des moyens de freinage 10. Il y a alors une indépendance physique des circuits hydraulique.
Le couple total de freinage peut dépendre en revanche de la pression dans chacune des chambres.

Ce second mode de réalisation se décline sous plusieurs variantes.

Dans une première variante présentée en **figure 3****,** les moyens de freinage 10 pour demi-essieu 100 comportent un élément mobile 10a et un unique élément fixe 10b configuré pour venir au contact de l'élément mobile 10a pour le freiner. Les deux chambres de commande 130, 150 agissent sur ledit unique élément fixe 10b par le biais d'un ou de deux pistons de frein 14.

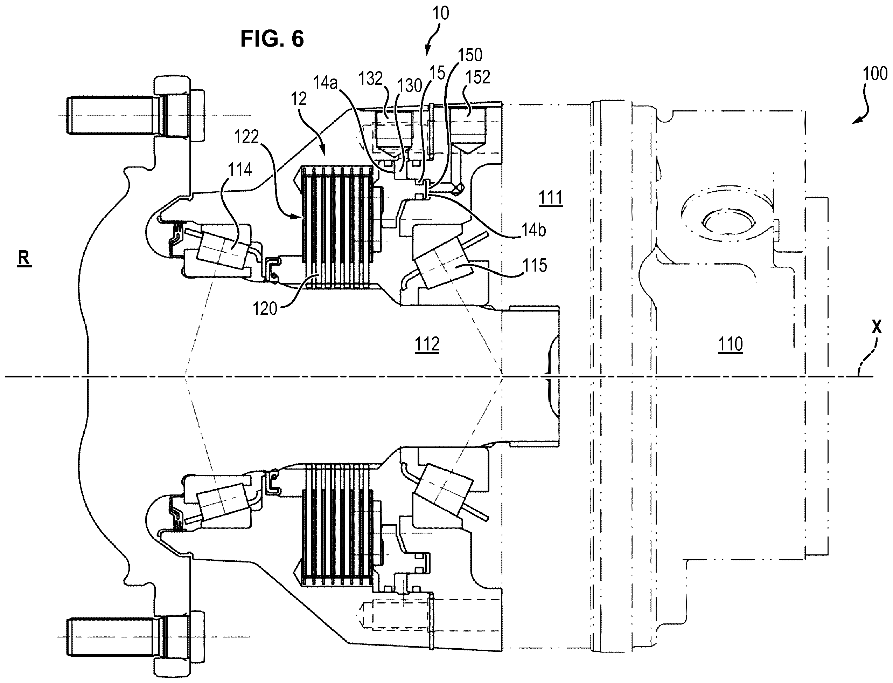

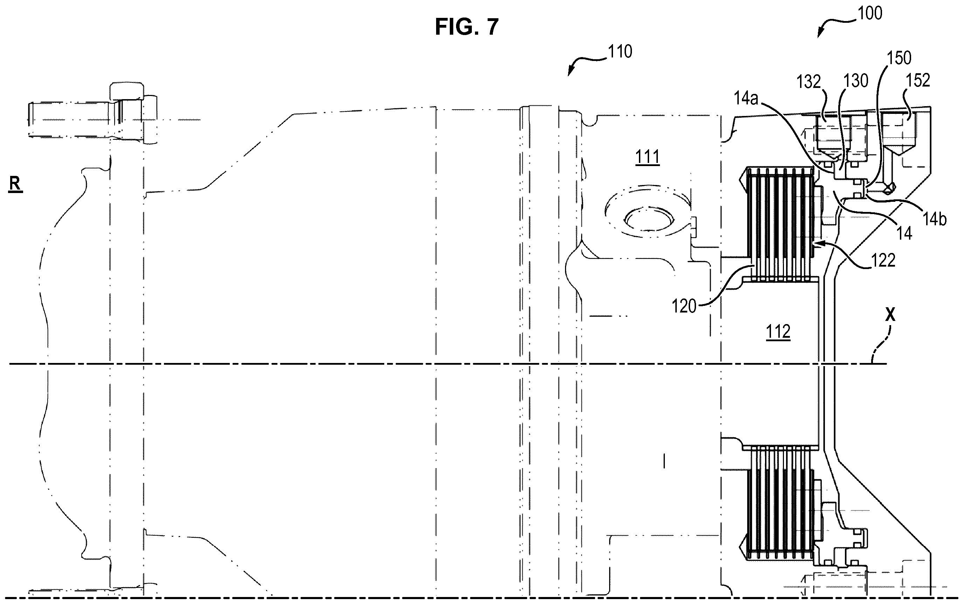

Dans le premier cas, le piston de frein 14 présente préférablement deux sections différentes 14a, 14b à deux endroits différents du piston 14, et chaque section contribue à définir une des chambres de commande 130, 150. Ce cas est illustré par les **figures 6** **et** **7****.**

Dans le deuxième cas, chaque chambre agit sur un piston et chaque piston agit sur l'élément mobile 10a. On obtient ainsi deux pistons qui agissent sur un unique élément mobile 10a. Ce cas est celui illustré schématiquement en **figure 3****.**

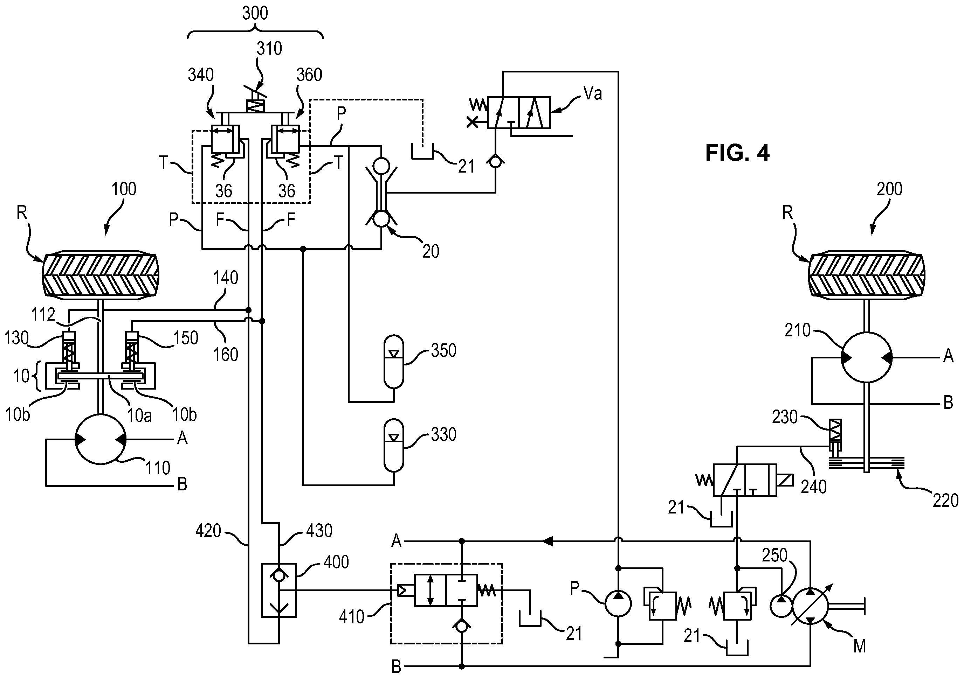

Dans une deuxième variante présentée en **figure 4****,** les moyens de freinage 10 pour demi-essieu 100 comportent un élément mobile 10a et deux éléments fixes 10b configurés pour venir au contact de l'élément mobile (10a) pour le freiner. Chaque chambre 130, 150 agit respectivement sur un seul élément mobile (10a).

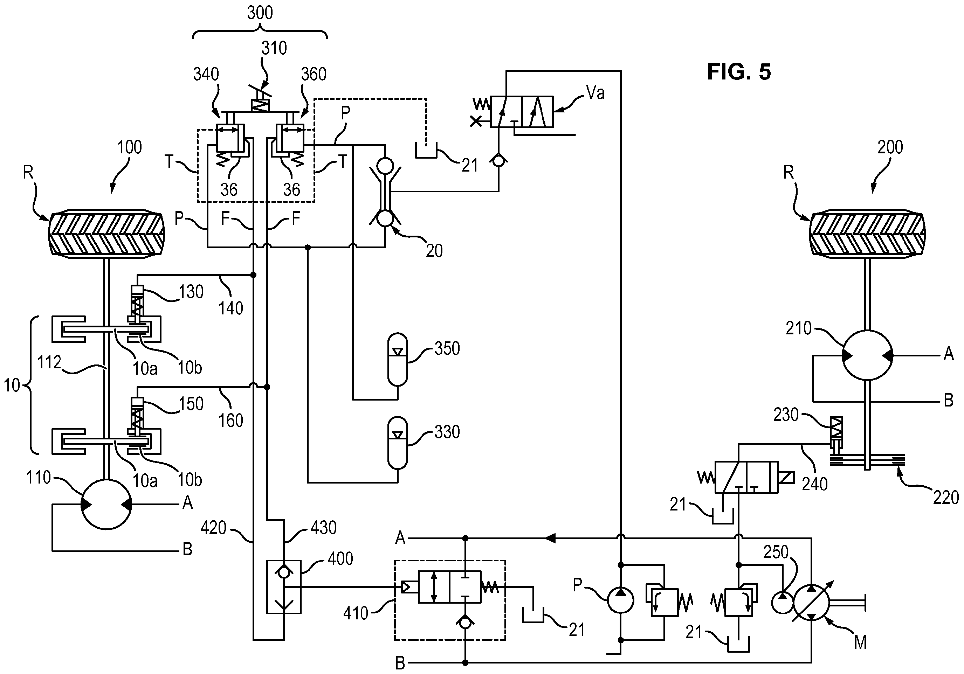

Enfin, dans une troisième variante présentée en **figure 5****,** les moyens de freinage 10 pour demi-essieu 100 comportent un premier élément mobile 10a et un premier élément fixe 10b configuré pour venir en contact de l'élément mobile 10a pour le freiner lorsque de l'huile sous pression est mise dans la première chambre 130, et dans lequel les moyens de freinage 10 pour le même demi-essieu 100 comportent un deuxième élément mobile 10a et un deuxième élément fixe 10b configuré pour venir en contact du deuxième élément mobile 10a pour le freiner lorsque de l'huile sous pression est mise dans la deuxième chambre de commande 150.

Par élément fixe 10b, il faut comprendre un élément fixe en rotation. En effet, l'engagement des freins peut comprendre une translation longitudinale de l'élément fixe 10b contre l'élément mobile 10a.

Les valves à actionnement manuel 340, 360 sont contrôlées par l'opérateur du véhicule via la commande mécanique manuelle 310. Il peut s'agir d'une manette ou d'une pédale. Par « manuel », on signifie « par intervention directe de l'homme », et pas uniquement « à la main ».

Lorsque l'opérateur a besoin de freiner, il appuie sur la pédale 310 qui libère de la pression depuis les sources 330, 350 pour activer les chambres de commande 130, 150 et provoquer le freinage.

Le freinage primaire (ou principal) est la situation normale, lorsque l'ensemble des commandes sont opérationnelles. Le freinage secondaire est un mode de fonctionnement qui est utilisé lors d'une anomalie sur le freinage principal. Il est possible de détecter une anomalie, afin d'alerter l'utilisateur, afin de prévoir une maintenance par exemple, ou de limiter les performances du véhicule, voire l'immobiliser en cas de défaillance majeure. Cette détection peut se faire par la présence d'un capteur de pression sur chacune des lignes 140 et 160. Si la pression dans une des lignes est assez différente de la pression dans l'autre, c'est-à-dire si une ligne monte en pression et pas l'autre, un signal d'erreur peut être envoyé au conducteur, par exemple sous forme d'alerte au tableau de bord pour lui signaler qu'une ligne de freinage est inopérante. De préférence, ces capteurs se trouvent au niveau de la valve de freinage 300. Si une anomalie apparait en cours de fonctionnement, l'utilisateur agira sur la commande mécanique310, mais l'effet de freinage ne sera appliqué que sur le circuit de commande opérationnel. L'écart de fonctionnement peut être mesuré et signalé à l'opérateur.

Les valves à actionnement manuel 340, 360 permettent un dosage progressif de la pression entre les sources 330, 350 et leur chambre de commande respective 130, 150.

On définit pour la valve de freinage 300, entre une position de repos, qui relie les deux lignes 140, 160 au réservoir, et une position maximale, qui autorise une mise sous pression maximale, une course d'activation de la commande mécanique 310. Préférablement, la mise sous pression est proportionnelle à cette course.

Des moyens de rappels 341, 361 maintiennent respectivement les deux valves 340, 360 en position de repos par défaut. Des lignes internes aux valves permettent l'évacuation d'huile pour autoriser le déplacement d'un tiroir au sein des valves 340, 360.

Chaque valve 340, 360 comprend une entrée et une sortie et permet une transmission de la pression entre son entrée et sa sortie en fonction dudit pilotage par translation d'un tiroir.

Dans un mode de réalisation préférentiel, la pression maximale transmissible par les valves 340, 360 ne dépend pas de la source de pression, mais uniquement des caractéristiques de ladite valve 300. Une telle valve 300 permet une plus grande opérabilité et une plus grande souplesse dans l'utilisation des sources de pression.

Dans un mode de réalisation particulier, les deux valves 340, 360 forment deux sous-unités d'une même valve physique 300 comprenant la commande mécanique 310. Dans ce cas, la valve à actionnement manuel 300 est donc une valve comprenant deux ports d'entrée et deux ports de sortie, chaque entrée étant relié à une seule sortie, et comprenant ladite commande mécanique unique 310 pour contrôler la relation fluidique entre chaque entrée et sa sortie respective.

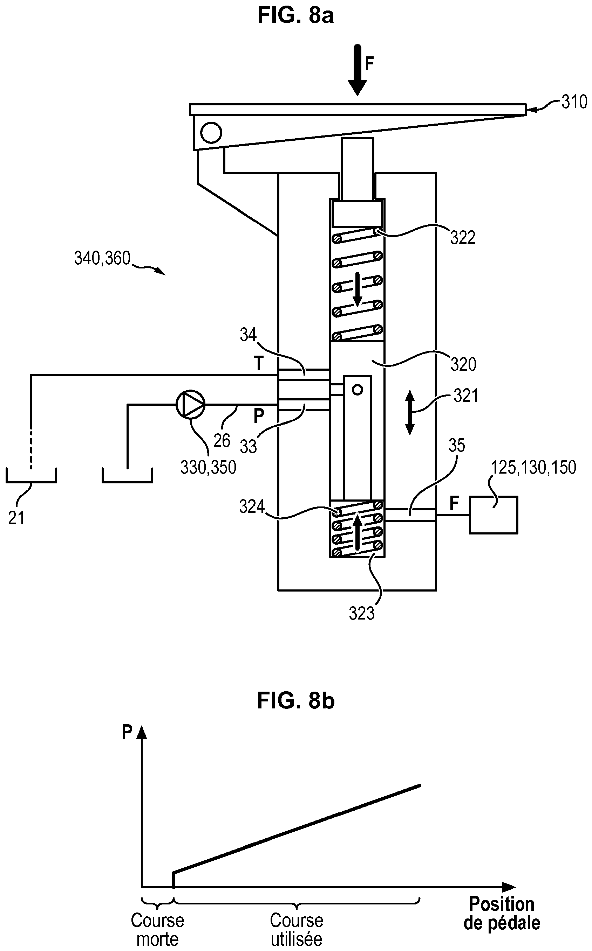

Chaque valve de régulation de pression 340, 360 est conforme à une valve représentée schématiquement en coupe à la **figure 8a** et comporte :
- un orifice d'entrée/sortie 33 relié à la source de pression 330, 350, telle qu'un accumulateur hydraulique, par une voie P, la voie P est donc soumise à un débit à une certaine pression correspondant à la pression délivrée par la source de pression 330, 350,
- un orifice d'entrée/sortie 34 relié au réservoir à pression atmosphérique 21 par une voie T, et
- un orifice d'entrée/sortie 35 relié à un chambre de commande 125, 130, 150 par une voie F.

Chaque valve de régulation de pression 340, 360 comprend une ligne 36 de mesure de pression dans la chambre 14 du vérin 11, permettant de réguler la pression dans la voie F en fonction du degré d'actionnement de la commande de frein. Cette ligne 36 est représentée schématiquement pour illustrer une rétroaction de la pression dans la chambre du frein sur le fonctionnement de la valve 32, la rétroaction étant décrite plus en détails ci-après.

Dans le mode de réalisation des **figures 2 à 5****,** le fait d'avoir des valves 340, 360 de régulation de pression différenciées pour les deux freins, chaque valve comprenant une ligne de mesure de pression pour réguler la pression dans la chambre du vérin correspondant permet, en réponse à une commande simultanée des freins, de différencier le degré d'activation des freins.

Comme visible sur la **figure 8a** chaque valve 32 comprend un plongeur ou tiroir 320 monté en translation dans un cylindre 321 de manière à sélectivement mettre en communication l'orifice 35 de la voie F reliée au chambre de commande 125, 130, 150 avec l'orifice 33 de la voie P à la pression de la source de pression 330, 350 ou avec l'orifice 34 de la voie T à la pression atmosphérique en fonction d'un degré d'actionnement de la pédale de frein 31.

A cet égard, la valve 32 comprend un ressort de chargement 322 mis en compression par actionnement de la commande mécanique 310 telle qu'une pédale de frein 310 (ou plus généralement de la commande mécanique progressive), tendant au déplacement du plongeur 320 pour mettre en communication la voie P avec la voie F.

La valve 32 comprend également une chambre de rétroaction 323 comprenant un ressort 324, le ressort et la chambre étant positionnés du côté opposé au ressort de chargement 322 par rapport au plongeur pour exercer une poussée antagoniste à celle du ressort de chargement. Ainsi en l'absence d'actionnement de la pédale 31, le ressort 324 exerce une poussée sur le plongeur qui met en communication la voie T avec la voie F et vide ainsi la chambre des freins et desserre les freins.

Lors de l'actionnement de la pédale 31, le ressort 322 augmente sa poussée sur le plongeur pour mettre en communication la voie P avec la voie F et ainsi serrer le frein en mettant en pression la chambre du frein. Parallèlement, la pression augmente également dans la chambre de rétroaction 323 puisque celle-ci est reliée à la chambre 14 du frein. La pression dans la chambre de rétroaction 323 est égale à la pression dans la chambre 14 du frein, aux pertes de charge éventuelles près.
La pression dans la chambre de rétroaction 323 exerce une poussée sur le plongeur 320 s'opposant à la poussée du ressort de chargement 322 résultant de l'actionnement du frein, et tendant à réduire le débit s'écoulant de la voie P à la voie F.

Lorsqu'il existe un équilibre entre la poussée du ressort de chargement 322 d'une part et la poussée exercée par la pression de fluide dans la chambre de rétroaction 323 d'autre part, le plongeur se maintient en équilibre et maintient la pression dans la voie F - et dans la chambre du frein - à une valeur constante.

L'équilibre dépend des caractéristiques géométriques de la valve (plongeur, cylindre) et du tarage du ressort de chargement 322. Ainsi, la valve 32 délivre une pression dans la chambre du frein et dans la voie F qui est proportionnelle à un degré d'actionnement de la pédale, le coefficient de proportionnalité dépendant des caractéristiques de la valve et du tarage du ressort.

On a représenté sur la **figure 8b** la relation entre la pression obtenue dans la chambre de commande 125, 130, 150 des moyens de freinage 10 et le degré d'actionnement de la commande mécanique 310. L'augmentation proportionnelle de la pression en fonction de la course de la commande mécanique ne commence que lorsque la course excède une couse appelée « course morte » dans laquelle la compression exercée par la pédale sur le ressort de chargement 322 n'est pas suffisante pour transmettre une force sur le plongeur 321.

Lorsque la pression dans la chambre de rétroaction 323 du frein excède la pression de consigne correspondant au degré d'actionnement de la commande mécanique, la pression supplémentaire dans la chambre de rétroaction 323 pousse le plongeur pour remettre en communication la voie T avec la voie F et diminuer la pression dans le frein.

La pression dans la ligne F est donc régulée quel que soit le débit circulant par F, tant que la capacité en débit de la pompe n'est pas atteinte, c'est-à-dire tant que la pompe peut fournir le débit consommé par le circuit branché sur la ligne F.

Ainsi la pression dans la voie F et dans la chambre de commande 125, 130, 150 est régulée à tout moment en fonction du degré d'actionnement de la commande du frein. Cette régulation se comprend lorsque la garniture de frein est physiquement en appui ou non sur son disque ou sur son tambour, lorsqu'il y a une pression sur la commande mécanique ou lorsqu'on la relâche, que le frein soit en mouvement, c'est-à-dire dynamiquement en train de bouger, ou statique, c'est-à-dire sans mouvement.

Dans ce mode de réalisation, c'est le fonctionnement même de la valve qui permet d'obtenir cette régulation de pression représentée schématiquement sur les figures par la ligne 36.

Alternativement, le fonctionnement de la valve pourrait être remplacé par une rétroaction électrique 36 pilotant la valve en fonction d'une valeur de pression mesurée dans la chambre du frein par un capteur dédié.

Les sources de pression 330, 350 sont avantageusement des accumulateurs hydrauliques. En effet, le dispositif étant en circuit fermé, il n'y a, aux fuites et pertes habituelles et liées au fonctionnement du dispositif et notamment liées au relâchement de la pression pour libérer les freins (le mouvement de défreinage du frein emmène l'huile vers le réservoir 21), pas de débit d'huile qui circule dans les premières et deuxièmes lignes 140, 160.

Comme illustré en **figures 2 à 5****,** un circuit de rechargement est prévu, afin de permettre le rechargement des accumulateurs 330, 350. En effet, il y a, comme indiqué précédemment, consommation de fluide par le fait du mouvement des pistons de freins, qui prélèvent du fluide des accumulateurs lors qu'ils poussent contre les garnitures, et relâche ce fluide vers le réservoir 21 lors du retour du piston à sa position de repos en fin de freinage.. Additionnellement, un dysfonctionnement temporaire ou une réparation peuvent provoquer le vidage des accumulateurs 330, 350 : il faut alors les remplir.

Le circuit de chargement comprend une pompe P qui peut alimenter, via un clapet LP (par exemple un clapet d'isolation à bille constitué de deux clapets anti-retour tête bêche reliés par une tige, de sorte que l'huile sous pression issue de la pompe P se dirige vers la source de pression 330, 350 la plus vidée) la première ligne 140, respectivement la deuxième 160, entre le premier accumulateur 330, respectivement le deuxième 350, et la valve à actionnement manuel 310. Une valve de remplissage Va est prévue, entre les limiteurs de pression LP et la pompe P, pour activer le remplissage. Les limiteurs de pression LP est en sens passant en direction des lignes 140, 160. Le circuit de chargement est classiquement connu et ne sera pas détaillé davantage.

Lorsque la valve Va est en position ouverte et que la pression dans les accumulateurs 330, 350 est inférieure à la pression de la pompe P, le remplissage des accumulateurs est en cours.

En cas de défaillance des accumulateurs, la valve Va est mise en position ouverte et la pompe P peut aussi faire office de source de pression pour les chambres de commande 130, 150.

La pompe P peut être la pompe de gavage 250 définie précédemment.

Dans un mode de réalisation représenté en **figures 2 à 5****,** les deux accumulateurs 330, 350 sont deux entités distinctes. Dans un mode de réalisation, les deux accumulateurs 330, 350 sont formés par deux chambres dans un même système d'accumulation.

Les moyens de freinage peuvent être de différents types.

On peut citer les freins à disque, dans lequel l'élément mobile 10a comprend un disque et l'élément fixe 10b comprend une mâchoire (ou garniture), et les freins à tambours, dans lequel l'élément mobile 10a comprend un tambour et l'élément fixe 10b comprend une mâchoire.

Dans un mode de réalisation particulier, les moyens de freinage 10 sont de type multidisques 120, c'est-à-dire que l'arbre 112 comprend une série de disques 120 solidaire en rotation dudit arbre 112 et s'étendant radialement autour. Ces disques sont freinés en rotation à l'aide de garnitures 122 non-mobiles en rotation (élément fixe 10b), qui viennent serrer les disques de l'arbre 112 (élément mobile 10a) dans la direction longitudinale lorsqu'une pression est appliquée dans l'une des chambres de commandes 130, 150.

Plus précisément, les moyens de freinage 10 comprennent avantageusement un couvercle de frein 12 et un au moins un piston de frein 14 mobile en translation selon l'axe longitudinal X. L'au moins un piston de frein 14 est solidaire en translation longitudinale des garnitures 122. Le couvercle 12 comprend une première arrivée d'huile 132 qui débouche dans la première chambre de pression 130 et, en fonction des variantes issues de modes de réalisation des moyens de freinage 10, une deuxième arrivée d'huile 152 qui débouche dans la deuxième chambre de pression 150, ou dans la première chambre de pression 30, toujours selon lesdites variantes.

Les chambres de pression 130 sont adaptées pour que l'huile sous pression à l'intérieur provoque la translation axiale de l'au moins un piston de frein 14. A cette fin, une des parois de chaque chambre de pression 130, 150 est définie par une partie de l'au moins un piston de frein 14. Ce mode de réalisation correspond à la première variante du deuxième mode de réalisation des moyens de freinage 10 **(****figure 3****).**

Comme présenté dans la première variante citée précédemment, dite à « piston simple à double chambre de commande » et présentée en **figures 6** **et** **7****,** un seul piston de frein 14 est prévu. Le piston 14 comprend alors deux sections différentes 14a, 14b, à deux endroits différents du piston 14. Ces deux sections 14a, 14b ferment respectivement une des deux chambres de pression 130, 150. Des joints d'étanchéité 15 sont prévus (sur le piston ou/et sur le couvercle) afin d'éviter toute communication d'huile entre les deux chambres 130, 150. Dans un mode de réalisation, les deux sections 14a, 14b forment des plans s'étendant radialement et les deux sections 14a, 14b ne sont pas dans le même plan radial (décalage longitudinal), ni à la même distance radiale (décalage radial).

De préférence, les deux sections de poussée 14a et 14b ont la même surface ou sensiblement la même surface, de sorte qu'à pression égale, les deux chambres 130, 150 génèrent la même force ou sensiblement la même force.

Il suffit qu'une seule des deux chambres 130, 150 soit alimentée en huile pour le piston de frein 14 puisse se déplacer en translation et provoquer le serrage des disques 120 par les garnitures 122.

Dans une autre variante illustrée schématiquement en **figure 3****,** deux pistons de frein 14 sont prévus, chaque piston de frein étant piloté par une des deux chambres de pression 130, 150. Pour cela, chaque piston de frein est préférablement indépendant en translation longitudinale de l'autre.

Comme indiqué précédemment, l'essieu est préférablement motorisé avec un moteur hydraulique 110. Le moteur hydraulique comprend notamment un carter 111, une came lobée (non visible sur les figures), un bloc-cylindre (non visible sur les figures), un distributeur (non visible sur les figures) qui alimente en huile le bloc-cylindre, et l'arbre 112, entrainé en rotation et fournissant du couple à la roue R. Entre le carter 111 et l'arbre 112, deux jeux de paliers 114, 115 en vis-à-vis sont prévus entre la roue R et le bloc-cylindre. On définit ainsi une extrémité externe et une extrémité interne pour l'arbre 112. L'extrémité externe est celle à laquelle sera attachée la roue, l'extrémité interne est celle opposée, située le plus à l'intérieur du véhicule.

Les moyens de freinage 10 sont avantageusement intégrés au moteur hydraulique 110. Deux variantes de moteur vont être présentées.

Dans une première variante de moteur présentée en **figure 6****,** les moyens de freinage 10 sont situés entre les deux jeux de paliers 114, 115 situés en vis-à-vis. Le couvercle 12 et le carter 111 sont solidaires, voire forment une même pièce.

On a alors, longitudinalement, dans l'ordre : la roue R, le jeu de palier 114, les disques 120/les garnitures 122, le jeu de palier 15, le bloc-cylindre, le distributeur.

Dans une deuxième variante de moteur présentée en **figure 7****,** les moyens de freinage sont situés au niveau de l'extrémité interne de l'arbre 112. Le couvercle 12 est solidaire du couvercle de distribution, voire forment une même pièce.

On a alors, longitudinalement, dans l'ordre : la roue R, le jeu de palier 114, le jeu de palier 15, le bloc-cylindre, le distributeur, les disques 120.

Alternativement, les moyens de freinage sont distincts du moteur 110 et sont configurés pour freiner directement la roue. Dans ce cas, l'essieu peut être indifféremment motorisé ou non.

Le moteur hydraulique 110 est alimenté et refoulé en huile par une pompe principale M via une ligne d'alimentation A et une ligne de refoulement B. La pompe principale M peut être entrainée par une machine thermique du véhicule, via une prise de force, ou bien être entrainée directement par la rotation d'un autre essieu du véhicule, afin d'effectuer un transfert de couple d'un essieu vers l'autre. La pompe de gavage 250 est entrainée elle-aussi par la prise de force par exemple.

L'essieu arrière 200 est lui-aussi avantageusement motorisé par un moteur 210 alimenté par la pompe M.

Un circuit de mise à vide est prévu, à l'aide d'une valve 410 qui permet de court-circuit le moteur hydraulique 110, 210 et de relier la ligne A à la ligne B. Cette valve 410 est pilotée hydrauliquement par un sélecteur 400 haute pression qui sélectionne la plus haute pression parmi les deux pressions liées au chambre de commande 130, 150 lorsque le freinage est activé via des prélèvements 420, 430 respectifs.

Lorsque le freinage n'est pas activée, la pression issue du sélecteur 410 est faible : ce dernier ne pilote pas la valve 410 qui reste en position bloquante ; lorsque le freinage est activé, la pression augmente dans au moins une des deux chambres de commande 130, 150 : le sélecteur 400 pilote la valve 410 en position passante.

Ce circuit de mise à vide permet de relier l'admission et l'échappement de la pompe principale de transmission M, empêchant ainsi le transfert de liquide hydraulique aux moteurs 110, 210 afin d'éviter d'apporter du couple et de freiner l'arbre 112 en même temps.

Le dispositif ou les ensembles décrits précédemment s'implémentent avantageusement sur des véhicules destinés à l'agriculture ou l'exploitation minière.

On peut citer les pulvérisatrices ou les pulvérisateurs automoteurs par exemple. Plus généralement, tout véhicule devant circuler sur route est concerné.

## Revendications

1. Dispositif de freinage pour essieu comprenant :
- une première source de pression (330),
- une première ligne hydraulique de commande (140), reliée à la première source de pression (330),
- une première valve à actionnement manuel (340) disposé sur la première ligne,
- des moyens de freinage hydrauliques (10) associés à un demi-essieu (100) de l'essieu, reliés à la première ligne hydraulique, de sorte que lesdits moyens (10) sont activables par mise sous pression,
le dispositif étant **caractérisé en ce qu'**il comprend :
- une deuxième source de pression (350),
- une deuxième ligne hydraulique de commande (160), reliée à la deuxième source de pression (350),
- une deuxième valve à actionnement manuel (360), et
**en ce que** :
- les moyens de freinage hydrauliques (10) associés audit demi-essieu sont reliés à la deuxième ligne hydraulique, de sorte que lesdits moyens sont activables par mise sous pression,
- les deux valves à actionnement manuel (340, 360) sont pilotables par une même commande mécanique (310).

2. Dispositif selon la revendication 1, dans lequel les moyens de freinage (10) du demi-essieu (100) comprennent une chambre de commande (125), un élément mobile (10a) et un élément fixe (10b) configuré pour venir en contact de l'élément mobile (10a) pour le freiner lorsque de l'huile sous pression est mise dans la première chambre (125), ladite chambre de pression (125) étant relié à la première ligne hydraulique (140) et à la deuxième ligne hydraulique (160) par un sélecteur haute pression, configuré pour sélectionner la plus haute pression parmi les deux lignes.

3. Dispositif selon la revendication 1, dans lequel les moyens de freinage (10) du demi-essieu (100) comprennent :
- une première chambre de commande (130) reliée à la première source de pression (330) par la première ligne hydraulique (140), et
- une deuxième chambre de commande (150), hydrauliquement étanche par rapport à la première chambre de commande (130), et reliée à la deuxième source de pression (350) par la deuxième ligne (160),
les deux chambres de commande (130, 150) provoquant chacune, lorsque mise sous pression, l'activation des moyens de freinage (10).

4. Dispositif selon la revendication 3, dans lequel les moyens de freinage (10) pour demi-essieu (100) comportent un élément mobile (10a) et au moins un élément fixe (10b) configuré pour venir en contact de l'élément mobile (10a) pour le freiner lorsque de l'huile sous pression est mise dans la première chambre (130) et/ou dans la seconde chambre (150), les deux chambres (130, 150) permettant l'action sur le même élément mobile (10a).

5. Dispositif selon la revendication 4, comprenant un seul élément fixe (10b), les deux chambres (130, 150) agissant sur le même élément fixe (10b), via un unique piston de frein.

6. Dispositif selon la revendication 5, dans lequel le piston de frein (14) présente deux sections différentes (14a, 14b) à deux endroits du piston (14) différents, pour les deux chambres de commande (130, 150).

7. Dispositif selon l'une quelconque des revendications précédentes, dans lequel les moyens de freinage (10) sont de type à disques (120), et sont configurés pour que la pression d'huile pilote la translation de garnitures (122) configurées pour venir serrer lesdits disques (120) et les freiner en rotation.

8. Dispositif selon l'une quelconque des revendications précédentes, dans lequel les valves à actionnement manuel (340, 360) sont configurées pour doser progressivement la communication en pression entre les sources de pression (330, 350) et les chambres de commandes respectives (130, 350).

9. Dispositif selon l'une quelconque des revendications précédentes dans lequel chaque valve à actionnement manuel comprend un orifice d'entrée/sortie relié à la source de pression respective, un orifice d'entrée/sortie relié à un réservoir, et un orifice d'entrée/sortie relié à au moins une chambre de commande, la valve de régulation de pression de fluide étant adaptée pour sélectivement relier l'orifice d'entrée/sortie relié à la chambre à l'un ou l'autre des autres orifices, en fonction de la pression dans la chambre et du degré d'actionnement de la commande.

10. Dispositif selon la revendication précédente dans lequel chaque valve à actionnement manuel comprend :
- un plongeur mobile en translation dans un cylindre,
- un organe de transfert de poussée, adapté pour exercer une poussée sur le plongeur tendant à mettre en communication l'orifice d'entrée-sortie relié à la source de pression avec l'orifice d'entrée/sortie relié à la chambre de commande en réponse à l'actionnement de la commande, et
- une chambre de rétroaction reliée à la chambre de commande par un orifice d'entrée/sortie de la valve, la chambre étant disposée d'un côté opposé à l'organe de transfert par rapport au plongeur de sorte qu'une pression de fluide dans la chambre exerce une poussée sur le plongeur tendant à mettre en communication l'orifice d'entrée/sortie relié à la chambre du frein avec l'orifice d'entrée/sortie relié au réservoir.

11. Dispositif selon l'une quelconque des revendications précédentes, dans lequel les valves à actionnement manuel (340, 360) et la commande mécanique (310) font partie d'une valve double circuit (300).

12. Dispositif selon l'une des revendications précédentes, comprenant en en outre des moyens de freinage hydraulique associables à un demi-essieu (100) d'un essieu (10), comprenant un élément mobile (10a) en rotation, un élément fixe (10b) en rotation, une première chambre de commande (130) et une deuxième chambre de commande (150), dans lequel chaque chambre de commande (130, 150) est configurée pour provoquer la mise en contact de l'élément fixe (10b) sur l'élément mobile (10a) lorsqu'une pression au sein de ladite chambre est appliquée.

13. Moteur hydraulique à came lobée et pistons radiaux comprenant un dispositif selon la revendication précédente.

14. Ensemble comprenant :
- un dispositif selon l'une quelconque des revendications 1 à 12,
- un moteur hydraulique (110) comprenant
Un carter (111),
Un arbre (112) pouvant être mis en rotation pour apporter du couple à l'essieu, et étant équipé des moyens de freinage (10), ledit arbre comprenant des disques (120), ledit arbre définissant un axe longitudinal (X),
dans lequel les moyens de freinage (10) comprennent un couvercle (12) solidaires du carter (111),
dans lequel des garnitures (122) sont configurées pour venir serrer et immobiliser la rotation des disques (120) de l'arbre.

15. Ensemble selon la revendication 14, comprenant en outre deux jeux de palier (114, 115) disposés en vis-à-vis et permettant la rotation de l'arbre (112) par rapport au carter (111), et dans lequel les moyens de freinage (10) sont intégrés au moteur hydraulique (110), le couvercle (12) étant solidaire avec le carter (111) ou formé par le carter (111) et les disques (120) et garnitures (122) sont disposés longitudinalement entre les deux jeux de paliers (114, 115).

16. Ensemble selon la revendication 14, dans lequel le moteur hydraulique (110) comprend un bloc-cylindre et un distributeur configuré pour alimenter en huile le bloc-cylindre, dans lequel les moyens de freinage (10) sont intégrés au moteur hydraulique (110), le couvercle (12) étant solidaire avec le carter (111) ou formé par le carter (111), et les éléments sont agencés longitudinalement selon l'ordre suivant : bloc-cylindre, distributeur et disques (120)/garnitures (122).

17. Véhicule comprenant un essieu (100) et un dispositif selon l'une quelconque des revendications 1 à 11 et/ou un ensemble selon l'une quelconque des revendications n° 14 à 16, dans lequel les moyens de freinage sont montés sur ledit essieu (100).

## Patentansprüche

1. Bremsvorrichtung für eine Achse, umfassend:
- eine erste Druckquelle (330),
- eine erste Steuerhydraulikleitung (140), die an die erste Druckquelle (330) angeschlossen ist,
- ein erstes manuell betätigbares Ventil (340), das in der ersten Leitung angeordnet ist,
- hydraulische Bremsmittel (10), die einer Halbachse (100) der Achse zugeordnet sind, die an die erste Hydraulikleitung angeschlossen sind, sodass die Mittel (10) durch Druckbeaufschlagung aktivierbar sind, wobei die Vorrichtung **dadurch gekennzeichnet ist, dass** sie umfasst:
- eine zweite Steuerhydraulikleitung (160), die an die zweite Druckquelle (350) angeschlossen ist,
- ein zweites manuell betätigbares Ventil (360), und
dadurch dass:
- die hydraulischen Bremsmittel (10), die der Halbachse zugeordnet sind, an die zweite Hydraulikleitung angeschlossen sind, sodass die Mittel durch Druckbeaufschlagung aktivierbar sind,
- die beiden manuell betätigbaren Ventile (340, 360) durch eine selbe mechanische Steuerung (310) ansteuerbar sind.

2. Vorrichtung nach Anspruch 1, wobei die Bremsmittel (10) der Halbachse (100) eine Steuerungskammer (125), ein bewegliches Element (10a) und ein feststehendes Element (10b) umfassen, das konfiguriert ist, um mit dem beweglichen Element (10a) in Kontakt zu treten, um es zu bremsen, wenn unter Druck stehendes Öl in die erste Kammer (125) gebracht wird, wobei die Druckkammer (125) durch einen Hochdruck-Selektor an die erste Hydraulikleitung (140) und an die zweite Hydraulikleitung (160) angeschlossen ist, der konfiguriert ist, um den höheren Druck aus den beiden Leitungen zu selektieren.

3. Vorrichtung nach Anspruch 1, wobei die Bremsmittel (10) der Halbachse (100) umfassen:
- eine erste Steuerungskammer (130), die durch die erste Hydraulikleitung (140) an die erste Druckquelle (330) angeschlossen ist, und
- eine zweite Steuerungskammer (150), die in Bezug auf die erste Steuerungskammer (130) hydraulisch dicht ist und durch die zweite Leitung (160) an die zweite Druckquelle (350) angeschlossen ist,
wobei die beiden Steuerungskammern (130, 150) jeweils bei Druckbeaufschlagung die Aktivierung der Bremsmittel (10) hervorrufen.

4. Vorrichtung nach Anspruch 3, wobei die Bremsmittel (10) für Halbachse (100) ein bewegliches Element (10a) und mindestens ein feststehendes Element (10b) beinhalten, das konfiguriert ist, um mit dem beweglichen Element (10a) in Kontakt zu treten, um es zu bremsen, wenn unter Druck stehendes Öl in die erste Kammer (130) und/ oder in die zweite Kammer (150) gebracht wird, wobei die beiden Kammern (130, 150) die Betätigung an demselben beweglichen Element (10a) ermöglichen.

5. Vorrichtung nach Anspruch 4, ein einziges feststehendes Element (10b) umfassend, wobei die beiden Kammern (130, 150) über einen einzigen Bremskolben auf dasselbe feststehende Element (10b) wirken.

6. Vorrichtung nach Anspruch 5, wobei der Bremskolben (14) zwei unterschiedliche Querschnitte (14a, 14b) an zwei unterschiedlichen Stellen des Kolbens (14) für die beiden Steuerungskammern (130, 150) aufweist.

7. Vorrichtung nach einem der vorstehenden Ansprüche, wobei die Bremsmittel (10) in der Art mit Scheiben (120) sind, und konfiguriert sind, damit der Öldruck den Vorschub von Belägen (122) ansteuert, die konfiguriert sind, um die Scheiben (120) zu klemmen und deren Drehung zu bremsen.

8. Vorrichtung nach einem der vorstehenden Ansprüche, wobei die manuell betätigbaren Ventile (340, 360) konfiguriert sind, um die Druckverbindung zwischen den Druckquellen (330, 350) und den jeweiligen Steuerungskammern (130, 350) progressiv zu dosieren.

9. Vorrichtung nach einem der vorstehenden Ansprüche, wobei jedes manuell betätigbare Ventil eine Eingangs-/Ausgangsöffnung umfasst, die an die jeweilige Druckquelle angeschlossen ist, eine Eingangs-/Ausgangsöffnung, die an einen Tank angeschlossen ist, und eine Eingangs-/Ausgangsöffnung, die an mindestens eine Steuerungskammer angeschlossen ist, wobei das Fluid-Druckregelventil angepasst ist, um selektiv die Eingangs-/Ausgangsöffnung, die an die Kammer angeschlossen ist, in Abhängigkeit von dem Druck in der Kammer und dem Betätigungsgrad der Steuerung an die eine oder die andere der anderen Öffnungen anzuschließen.

10. Vorrichtung nach dem vorstehenden Anspruch, wobei jedes manuell betätigbare Ventil umfasst:
- einen in einem Zylinder vorschubbeweglichen Plunger,
- ein Schubübertragungsorgan, das angepasst ist, um einen Schub auf den Plunger auszuüben, der dazu tendiert, die Eingangs-/Ausgangsöffnung, die an die Druckquelle angeschlossen ist, mit der Eingangs-/Ausgangsöffnung, die an die Steuerungskammer angeschlossen ist, als Reaktion auf die Betätigung der Steuerung in Verbindung zu bringen, und
- eine Rückkopplungskammer, die durch eine Eingangs-/Ausgangsöffnung des Ventils an die Steuerungskammer angeschlossen ist, wobei die Kammer auf einer Seite gegenüber dem Übertragungsorgan in Bezug auf den Plunger angeordnet ist, sodass ein Fluiddruck in der Kammer einen Schub auf den Plunger ausübt, der dazu tendiert, die Eingangs-/Ausgangsöffnung, die an die Kammer der Bremse angeschlossen ist, mit der Eingangs-/Ausgangsöffnung, die an den Tank angeschlossen ist, in Verbindung zu bringen.

11. Vorrichtung nach einem der vorstehenden Ansprüche, wobei die manuell betätigbaren Ventile (340, 360) und die mechanische Steuerung (310) einem Doppelkreisventil (300) angehören.

12. Vorrichtung nach einem der vorstehenden Ansprüche, weiter hydraulische Bremsmittel umfassend, die einer Halbachse (100) einer Achse (10) zuordenbar sind, ein drehbewegliches Element (10a), ein drehfestes Element (10b), eine erste Steuerungskammer (130) und eine zweite Steuerungskammer (150) umfassend, wobei jede Steuerungskammer (130, 150) konfiguriert ist, um das In-Kontakt-treten des feststehenden Elements (10b) auf dem beweglichen Element (10a) bewirken, wenn ein Druck innerhalb der Kammer angelegt wird.

13. Hydraulikmotor mit gelapptem Nocken und radialen Kolben, der eine Vorrichtung nach dem vorstehenden Anspruch umfasst.

14. Baugruppe, umfassend:
- eine Vorrichtung nach einem der Ansprüche 1 bis 12,
- einen Hydraulikmotor (110), umfassend ein Gehäuse (111),
eine Welle (112), die in Drehung versetzt werden kann, um ein Moment an der Welle anzulegen, und die mit Bremsmitteln (10) ausgerüstet ist, wobei die Welle Scheiben (120) umfasst, wobei die Welle eine Längsachse (X) definiert,
wobei die Bremsmittel (10) einen Deckel (12) umfassen, der fest mit dem Gehäuse (111) verbunden ist,
wobei die Beläge (122) konfiguriert sind, um die Drehung der Scheiben (120) der Welle zu klemmen und anzuhalten.

15. Baugruppe nach Anspruch 14, weiter zwei Lagersätze (114, 115) umfassend, die einander gegenüber angeordnet sind, und die Drehung der Welle (112) in Bezug auf das Gehäuse (111) ermöglichen, und wobei die Bremsmittel (10) in den Hydraulikmotor (110) integriert sind, wobei der Deckel (12) fest mit dem Gehäuse (111) verbunden ist, oder durch das Gehäuse (111) gebildet ist, und die Scheiben (120) und Beläge (122) längsgerichtet zwischen den Lagersätzen (114, 115) angeordnet sind.

16. Baugruppe nach Anspruch 14, wobei der Hydraulikmotor (110) einen Zylinderblock und einen Verteiler umfasst, der konfiguriert ist, um den Zylinderblock mit Öl zu versorgen, wobei die Bremsmittel (10) in den Hydraulikmotor (110) integriert sind, wobei der Deckel (12) fest mit dem Gehäuse (111) verbunden ist, oder durch das Gehäuse (111) gebildet ist, und die Elemente in der folgenden Reihenfolge längsgerichtet angeordnet sind: Zylinderblock, Verteiler und Scheiben (120) / Beläge (122).

17. Fahrzeug, umfassend eine Achse (100) und eine Vorrichtung nach einem der Ansprüche 1 bis 11 und/ oder eine Baugruppe nach einem der Ansprüche 14 bis 16, wobei die Bremsmittel auf der Achse (100) montiert sind.

## Claims

1. A braking system for an axle comprising:
- a first pressure source (330),
- a first hydraulic control line (140), connected to the first pressure source (330),
- a first manually actuated valve (340) disposed on the first line,
- hydraulic braking means (10) associated with a half-axle (100) of the axle, connected to the first hydraulic line, so that said means (10) can be activated by pressurisation,
the system being **characterised in that** it comprises:
- a second pressure source (350),
- a second hydraulic control line (160), connected to the second pressure source (350),
- a second manually actuated valve (360), and
**in that**:
- the hydraulic braking means (10) associated with said half-axle are connected to the second hydraulic line, so that said means can be activated by pressurisation,
- both manually actuated valves (340, 360) can be driven by the same mechanical control (310).

2. The system according to claim 1, wherein the braking means (10) of the half-axle (100) comprise a control chamber (125), a movable element (10a) and a fixed element (10b) configured to contact the movable element (10a) to brake it when pressurised oil is put into the first chamber (125), said pressure chamber (125) being connected to the first hydraulic line (140) and to the second hydraulic line (160) by a high pressure selector, configured to select the highest pressure among the two lines.

3. The system according to claim 1, wherein the braking means (10) of the half-axle (100) comprise:
- a first control chamber (130) connected to the first pressure source (330) by the first hydraulic line (140), and
- a second control chamber (150), hydraulically sealed from the first control chamber (130), and connected to the second pressure source (350) by the second line (160), both control chambers (130, 150) each causing, when pressurised, the activation of the braking means (10).

4. The system according to claim 3, wherein the braking means (10) for the half-axle (100) include a movable element (10a) and at least one fixed element (10b) configured to contact the movable element (10a) to brake it when pressurised oil is put in the first chamber (130) and/or in the second chamber (150), the two chambers (130, 150) allowing action on the same movable element (10a).

5. The system according to claim 4, comprising a single fixed element (10b), the two chambers (130, 150) acting on the same fixed element (10b), via a single brake piston.

6. The system according to claim 5, wherein the brake piston (14) has two different sections (14a, 14b) at two different locations of the piston (14), for the two control chambers (130, 150).

7. The system according to any one of the preceding claims, wherein the braking means (10) are of the disc type (120), and are configured so that the oil pressure drives the translation of pads (122) configured to clamp said discs (120) and brake them in rotation.

8. The system according to any one of the preceding claims, wherein the manually actuated valves (340, 360) are configured to gradually dose the pressure communication between the pressure sources (330, 350) and the respective control chambers (130, 350).

9. The system according to any one of the preceding claims wherein each manually actuated valve comprises an inlet/outlet orifice connected to the respective pressure source, an inlet/outlet orifice connected to a reservoir, and an inlet/outlet orifice connected to at least one control chamber, the fluid pressure regulating valve being adapted to selectively connect the inlet/outlet orifice connected to the chamber to either one of the other orifices, depending on the pressure in the chamber and the degree of actuation of the control.

10. The system according to the preceding claim wherein each manually actuated valve comprises:
- a plunger movable in translation in a cylinder,
- a thrust transfer member, adapted to exert a thrust on the plunger tending to communicate the inlet-outlet orifice connected to the pressure source with the inlet/outlet orifice connected to the control chamber in response to the actuation of the control, and
- a feedback chamber connected to the control chamber by an inlet/outlet orifice of the valve, the chamber being disposed on a side opposite to the transfer member relative to the plunger so that a fluid pressure in the chamber exerts a thrust on the plunger tending to communicate the inlet/outlet orifice connected to the brake chamber with the inlet/outlet orifice connected to the reservoir.

11. The system according to any one of the preceding claims, wherein the manually actuated valves (340, 360) and the mechanical control (310) form part of a double circuit valve (300).

12. The system according to one of the preceding claims, further comprising hydraulic braking means that can be associated with a half-axle (100) of an axle (10), comprising a rotationally movable element (10a), a rotationally fixed element (10b), a first control chamber (130) and a second control chamber (150), wherein each control chamber (130, 150) is configured to cause contacting the fixed member (10b) on the movable element (10a) when pressure within said chamber is applied.

13. A hydraulic motor with lobed cam and radial pistons comprising a system according to the preceding claim.

14. An assembly comprising:
- a system according to any one of claims 1 to 12,
- a hydraulic motor (110) comprising
A casing (111),
A shaft (112) capable of being rotated to provide torque to the axle, and being equipped with braking means (10), said shaft comprising discs (120), said shaft defining a longitudinal axis (X),
wherein the braking means (10) comprise a cover (12) integral with the housing (111),
wherein pads (122) are configured to clamp and immobilise the rotation of the discs (120) of the shaft.

15. The assembly according to claim 14, further comprising two sets of bearings (114, 115) disposed facing each other and allowing rotation of the shaft (112) relative to the casing (111), and wherein the braking means (10) are integrated into the hydraulic motor (110), the cover (12) being integral with the casing (111) or formed by the casing (111) and the discs (120) and pads (122) are disposed longitudinally between the two sets of bearings (114, 115).

16. The assembly according to claim 14, wherein the hydraulic motor (110) comprises a cylinder block and a distributor configured to supply oil to the cylinder block, wherein the braking means (10) are integrated with the hydraulic motor (110), the cover (12) being integral with the casing (111) or formed by the casing (111), and the elements are arranged longitudinally in the following order: cylinder block, distributor and discs (120)/pads (122).

17. A vehicle comprising an axle (100) and a system according to any one of claims 1 to 11 and/or an assembly according to any one of claims n°14 to 16, wherein the braking means are mounted on said axle (100).
